Europäisches Patentamt

European Patent Office

Office européen des brevets

(19)

(11) Veröffentlichungsnummer: **0 298 337 B1**

# EUROPÄISCHE PATENTSCHRIFT

(12)

(45) Veröffentlichungstag der Patentschrift:
07.08.91 Patentblatt 91/32

(51) Int. Cl.⁵: **A61C 17/00**, A61C 1/07

(21) Anmeldenummer: **88110255.2**

(22) Anmeldetag: **28.06.88**

(54) Vorrichtung zum Entfernen von Zahnstein.

(30) Priorität: **10.07.87 DE 3722787**

(43) Veröffentlichungstag der Anmeldung:
**11.01.89 Patentblatt 89/02**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
**EP-A- 0 221 460
DE-C- 524 651
DE-C- 545 369
DE-C- 564 697**

(73) Patentinhaber: **BAYER AG
W-5090 Leverkusen 1 Bayerwerk (DE)**

(72) Erfinder: **Schulz, Hans Hermann Dr.
Wichheimer Strasse 288
W-5000 Koeln 80 (DE)**
Erfinder: **Massel, Hans Dieter
Meerbuscher Strasse 10
W-4047 Dormagen (DE)**
Erfinder: **Stotzem, Karl-Josef
Bahnhofstrasse 24
W-4047 Dormagen (DE)**

## Beschreibung

Die Erfindung betrifft eine Vorrichtung zum Entfernen von Zahnstein mit einem Handstück, welches eine über einen Exzenterantrieb in longitudinale Schwingungen versetzbare, stabförmige Halterung aufweist, an deren distalem Ende ein Bearbeitungsinstrument angebracht ist.

Ein Instrument dieser Art ist in DE-C-545369 beschrieben. Es zeichnet sich durch ein kolbenähnliches Kopfstück aus, das von einem Exzenter angetrieben wird und in axialer Verlängerung mit einem Innengewinde versehen ist, um verschiedene Werkzeuge, z.B. Schaber, Messer, Sägen, einzusetzen. Dabei kann der Azimut-Winkel der Werkzeuge durch eine verdrehbare Führungskappe eingestellt werden. Des weiteren ist in EP-A-0221460 eine Vorrichtung zum Entfernen von Zahnstein beschrieben, die ebenfalls darauf beruht, daß ein Schaber Longitudinal-Schwingungen ausführt, die durch eine rotierende Antriebswelle und Übertragungsmittel zur Umwandlung der Rotation in eine Hin- und Herbewegung erzeugt werden. Die Mechanik zur Übertragung ist so ausgeführt, daß der Schaber eine langsame Hin- und eine schlagartige Rückbewegung ausführt. Zum dynamischen Massenausgleich ist ferner ein Schlagkörper vorgesehen, der mit der Schlagstange gekuppelt ist und dadurch eine der Bewegung der Schlagstange entgegengesetzte Bewegung ausführt. Dadurch wird erreicht, daß das Gerät ruhig in der Hand des Operateurs liegt und die schlagartige Rückwärtsbewegung des Schabers nicht zu Beeinträchtigungen führt.

Der Erfindung liegt die Aufgabe zugrunde, eine Vorrichtung zum Entfernen von Zahnstein zu entwickeln, die in der zahnärztlichen Praxis verhältnismäßig leicht zu handhaben ist, d.h. keine langwierigen Lernprozesse des Personals erforderlich macht und trotzdem hochwirksam ist.

Dabei wird insbesondere angestrebt, daß sich die jeweilige Arbeitsfläche des Instruments automatisch zur gekrümmten Zahnoberfläche hin orientiert.

Diese Aufgabe wird — ausgehend von der eingangs beschriebenen Vorrichtung — erfindungsgemäß dadurch gelöst, daß die stabförmige Halterung an ihrem proximalen Ende von einer eine Drehbewegung, jedoch keine Längsverschiebung, der stabförmigen Halterung zulassenden Manschette umgeben ist, welche vom Exzenterantrieb zusammen mit der stabförmigen Halterung in longitudinale Schwingungen mit einer Frequenz von 15 bis 150 Hz und einer Amplitude von 0,1 bis 2 mm versetzbar ist, und daß das Bearbeitungsinstrument seitlich versetzt zur Achse der stabförmigen Halterung angebracht ist.

Es hat sich überraschenderweise gezeigt, daß die relativ niederfrequenten Longitudinal-Schwingungen des Bearbeitungsinstrumentes in einem Amplitudenbereich von 0,1 bis 2 mm, vorzugsweise 0,3 bis 0,6 mm, eine hochwirksame Zahnsteinentfernung ermöglichen. Dabei ist das Gerät einfach zu handhaben und erfordert keine speziellen Erfahrungen. Ein weiterer Vorteil liegt darin, daß die Vorrichtung sehr einfach aufgebaut ist und mit handelsüblichen zahnärztlichen Behandlungsgeräten, die über eine rotierende Welle verfügen, kombiniert werden kann.

Das neue Gerät kann daher als zusätzliche Komponente preisgünstig in die zahnärztliche Praxis eingeführt werden.

Im folgenden wird ein Ausführungsbeispiel der Erfindung anhand von Zeichnungen näher erläutert.
Es zeigen :

Fig. 1    die Halterung für das Bearbeitungsinstrument (Schnittbild) und

Fig. 2    das auf die Halterung nach Fig. 1 aufsteckbare Kopfstück mit einem Aufsatz für die Bearbeitungsinstrumente.

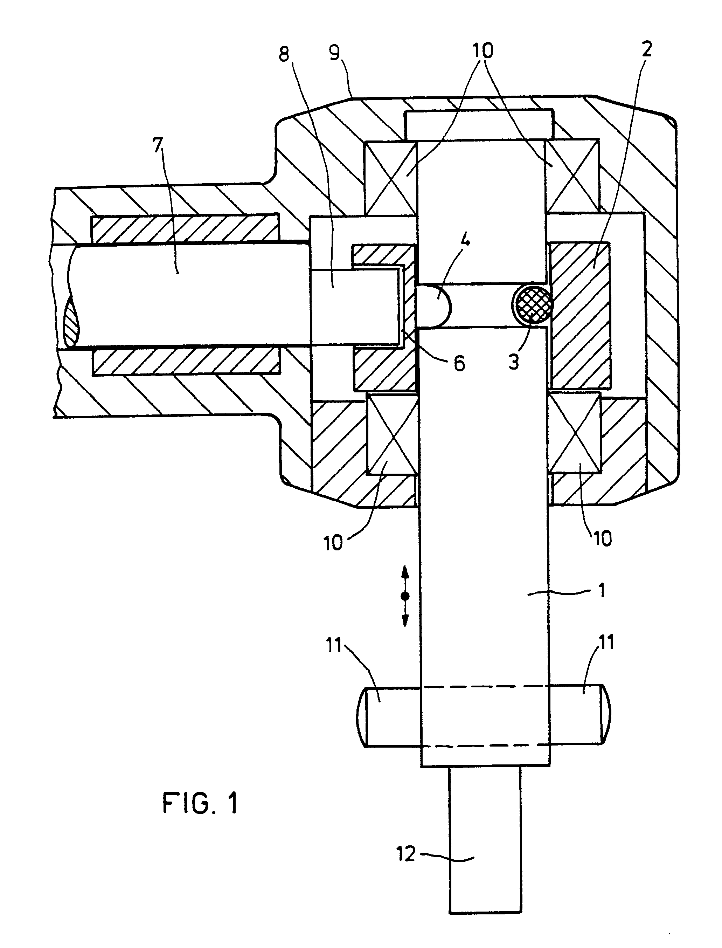

Gemäß Fig. 1 besteht die stabförmige Halterung 1 aus einem zylindrischen Metallstück, das in longitudinaler, d.h. axialer Richtung in Schwingungen versetzt werden kann. An ihrem proximalen, d.h. der Hand zugewandten Ende ist der zylindrische Metallstab 1 mit einer Manschette 2 versehen. Die Manschette 2 läßt eine Drehbewegung, jedoch keine Längsverschiebung der stabförmigen Halterung 1, zu. Dies wird durch einen mit der Manschette 2 verbundenen Haltestift 3 erreicht, der senkrecht zur Stabachse in eine Ringnut 4 am Metallstab 1 eingreift. Aufgrund dieser konstruktiven Maßnahmen kann man den Metallstab 1 (stabförmige Halterung) in der Manschette 2 in einem weiten Winkelbereich um seine Längsachse drehen, während eine axiale Verschiebung relativ zur Manschette ausgeschlossen ist.

Die Manschette 2 weist ferner eine senkrecht zur Stabachse orientierte Nut 6 auf, in die ein mit einem Exzenterantrieb 7 verbundener Bolzen 8 eingeführt werden kann. Der Exzenterantrieb 7 steht seinerseits über eine rotierende, biegsame Welle mit einem Motor in Verbindung. Das obere (proximale) Ende des zylindrischen Metallstabs ist ebenso wie die Manschette 2 von dem Exzentergehäuse 9 umschlossen. Im Exzentergehäuse 9 sind Gleitlager 10 für den Metallstab 1 angeordnet. Der Exzenter bewirkt, daß sich der Bolzen 8 auf und ab, d.h. senkrecht zu seiner Achse, bewegt. Diese Bewegung wird durch die Manschette 2 auf die stabförmige Halterung 1 übertragen, die dann entsprechend der Exzenterbewegung longitudinale Schwingungen ausführt. Die Frequenz liegt dabei in einem Bereich von 3000 bis 6000 Schwingungen/min. Die Amplitude, d.h. der Hub der stabförmigen Halterung beträgt vorzugsweise 0,3 bis 0,6 mm. Im Gegensatz zu den bekannten Ultraschallgeräten zeichnet sich diese Arbeitsweise einerseits durch eine relativ niedrige Frequenz und andererseits durch relativ große Amplituden aus.

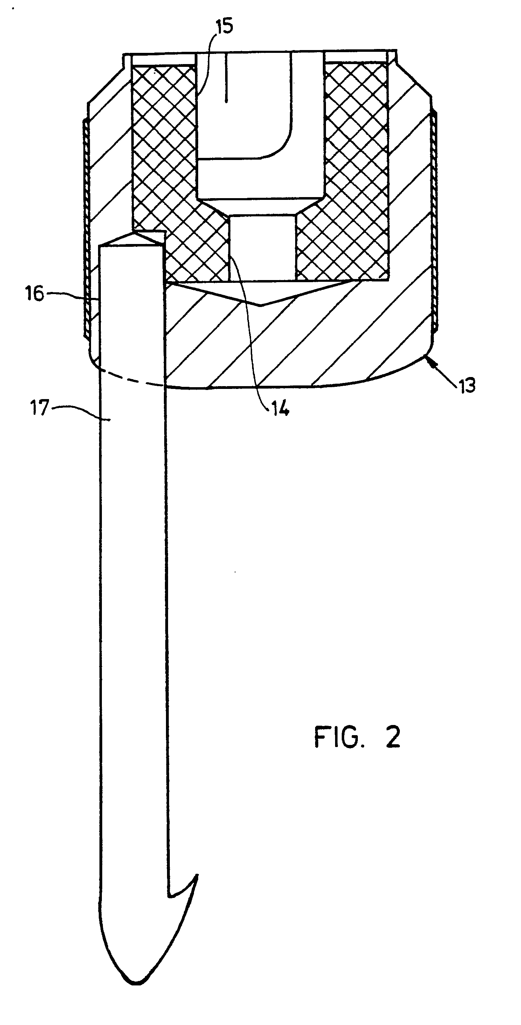

Am distalen Ende der stabförmigen Halterung 1 (in Fig. 1 am unteren Ende der Halterung) sind Querstege 11 und ein verjüngter Zapfen 12 vorgesehen, die Bestandteile eines Bajonettverschlusses sind. Mit Hilfe dieses Bajonettverschlusses kann auf die stabförmige Halterung 1 ein Kopfstück 13 aufgesetzt werden, das in Fig. 2 gezeigt ist.

Das Kopfstück 13 wird in der Weise aufgesetzt, daß sich die stabförmige Halterung mit dem Zapfen 12 in die axiale Bohrung 14 des Kopfstückes schiebt. Bei einer seitlichen Drehung des Kopfstückes rasten dann die Querstege 11 in die entsprechenden seitlichen Aussparungen 15 ein, so daß das Kopfstück 13 an der stabförmigen Halterung 1 mechanisch fixiert ist. Anstelle dieses Bajonettverschlusses könnte natürlich auch eine Schraubverbindung zur Fixierung des Kopfstückes 13 vorgesehen werden. Am Kopfstück 13 ist seitlich versetzt zur Achse in ca. 2 bis 5 mm Abstand eine achsenparallele Bohrung 16 angeordnet, die für die Aufnahme der üblichen Zahnbearbeitungsinstrumente 17, z.B. Scaler, Meißel, Tompkins-Feilen, bestimmt ist (Steckverbindung). Durch die außeraxiale Befestigung wird erreicht, daß sich die jeweilige Bearbeitungsfläche des Instruments automatisch zur gekrümmten Zahnoberfläche orientiert. Darüber hinaus erlaubt die Drehung der stabförmigen Halterung 1 um ihre Längsachse in Verbindung mit der außeraxialen Anordnung des Bearbeitungsinstruments am Kopfstück, das Gerät mittels der Finger in der bestmöglichen Arbeitsposition zu halten.

## Patentansprüche

1. Vorrichtung zum Entfernen von Zahnstein mit einem Handstück, welches eine über einen Exzenterantrieb (7, 8) in longitudinale Schwingungen versetzbare, stabförmige Halterung (1) aufweist, an deren distalem Ende ein Bearbeitungsinstrument (17) angebracht ist, dadurch gekennzeichnet, daß die stabförmige Halterung (1) an ihrem proximalen Ende von einer eine Drehbewegung, jedoch keine Längsverschiebung, der stabförmigen Halterung zulassenden Manschette (2) umgeben ist, welche vom Exzenterantrieb (7, 8) zusammen mit der stabförmigen Halterung in longitudinale Schwingungen mit einer Frequenz von 15 bis 150 Hz und einer Amplitude von 0,1 bis 2 mm versetzbar ist, und daß das Bearbeitungsinstrument (17) seitlich versetzt zur Achse der stabförmigen Halterung angebracht ist.

## Claims

1. Apparatus for removing tartar, with a handpiece which has a rod-shaped holding device (1) which can be longitudinally oscillated by means of an eccentric drive (7, 8) and at whose distal end a working instrument (17) is arranged, characterised in that the rod-shaped holding device (1) is surrounded, at its proximal end, by a sleeve (2) which permits a rotary movement but no longitudinal displacement of the rod-shaped holding device and which, together with the rod-shaped holding device, can be longitudinally oscillated by the eccentric drive (7, 8) at a frequency of 15 to 150 Hz and an amplitude of 0.1 to 2 mm, and in that the working instrument (17) is arranged laterally offset relative to the axis of the rod-shaped holding device.

## Revendications

1. Dispositif pour enlever le tartre des dents avec un porte-outils qui présente un support (1), en forme de barreau qu'un mécanisme d'entrainement excentré (7, 8) peut entrainer en vibrations longitudinales et à l'extrémité avant duquel est rapporté un instrument de traitement (17), dispositif caractérisé par le fait qu'à son extrémité arrière, le support en forme de barreau (1) est entouré d'une garniture (2) qui autorise un mouvement de rotation, mais non un coulissement longitudinal du support en forme de barreau et qu'un mécanisme d'entrainement excentré (7, 8) peut en même temps que le support en forme de barreau, entrainer en vibrations longitudinales d'une fréquence de 15 à 150 Hz d'une amplitude de 0,1 à 2 mm, et par le fait que l'instrument de traitement (17) est rapporté décalé latéralement par rapport à l'axe du support en forme de barreau.

3

FIG. 1

15

16

17

13

14

FIG. 2